# FASCICULE DE BREVET EUROPEEN

(11) **EP 0 497 941 B1**
(45) Date de publication et mention de la délivrance du brevet: **07.09.1994**
(21) Numéro de dépôt: 91914232.3
(22) Date de dépôt: 25.07.1991
(51) Int. Cl.: C04B 41/87, B22D 41/02

(54) **PROCEDE POUR LA FABRICATION D'UN MATERIAU REFRACTAIRE ISOLANT RIGIDE ET MATERIAU AINSI OBTENU**
VERFAHREN ZUR HERSTELLUNG EINES STARREN ISOLIERENDEN FEUERFESTEN MATERIALS, UND VERFAHRENSGEMÄSS HERGESTELLTES MATERIAL
METHOD FOR MANUFACTURING A RIGID REFRACTORY INSULATING MATERIAL, AND MATERIAL THEREBY OBTAINED

(30) Priorité: 03.08.1990 FR 9010160
(43) Date de publication de la demande: 12.08.1992
(73) Titulaire: PRODUITS CELLULOSIQUES ISOLANTS- PROCELIS Société anonyme:, 38300 Bourgoin Jallieu (FR)
(72) Inventeur: GRANDIN DE L'EPREVIER, Alain, F-03350 Le Brethon (FR)
(74) Mandataire: Laurent, Michel
(86) Numéro de dépôt international: FR9100616
(87) Numéro de publication internationale: WO9202472

(56) Documents cités:
- EP-A- 0 263 468
- FR-A- 1 438 091
- GB-A- 2 097 777
- US-A- 3 817 781
- US-A- 4 568 652
- Chemical abstracts, vol. 93, n 26 December 1980, (Columbus, Ohio, US), see page 304, abstract 244264a, & JP, A, 8080782 (NIPPON CHEMICAL INDUSTRIAL CO., LTD) 18 June 1980
- Journal of the Ceramic Society of Japan, vol. 98, n 1 1990 (JP) J. Asaumi et al "Surface modification of mullite by partial infiltration of zirconia", pages 52-59, see column 3, lines 5-20; column 3, line 54 - column 4, line 3; column 4, line 60 - column 5, line 16; column 15, lines 20-42

## Description

### Domaine Technique

L'invention concerne un procédé pour la fabrication d'un matériau réfractaire isolant poreux et rigide, susceptible de travailler au contact d'un métal ferreux fondu, notamment comme moule lors de la coulée de l'acier. Elle vise également le matériau réfractaire poreux isolant rigide ainsi obtenu.

Il est bien connu d'utiliser des matériaux réfractaires au contact d'un métal en fusion, notamment lors de la coulée de l'acier. Il importe que ce matériau puisse résister sans dommage, sans altération, ni corrosion à des températures de plus de 1000°C, notamment de 1400 à 1600°C (dans le cas de l'acier).

En pratique, on utilise essentiellement de la brique ou du béton, c'est-à-dire des matériaux denses et massifs. Or, on le sait, ces matériaux, du fait de leur faible caractère isolant thermique, sont peu adaptés pour une utilisation dans les procédés de coulée continue. Il en résulte une grande difficulté à maîtriser les pertes thermiques et donc la température du métal, ce qui est pourtant essentiel dans les procédés de coulée continue pour obtenir une qualité métallurgique régulière.

On connait par ailleurs des matériaux céramiques composites isolants, utilisés essentiellement pour minimiser les pertes thermiques d'une enceinte, telle qu'un four, du fait de leur très faible conductivité thermique. Malheureusement, ces produits, s'ils sont bien réfractaires et isolants, sont facilement mouillés et pénétrés par l'acier fondu. Le métal non seulement ruine le caractère isolant en pénétrant dans les pores du matériau, mais de plus il tend à corroder la céramique en s'oxydant au contact de celle-ci.

### Techniques Antérieures

Dans le document FR-A-1 438 091, on a proposé d'améliorer la blancheur de la porcelaine en l'imprégnant, notamemnt sous vide, d'acétate de zircone, puis en la séchant et en la cuisant. Au cours de la cuisson, la zircone est fixée par des liaisons silicatées, ce qui confère à la céramique une blancheur améliorée.

Dans le document US-A-4 568 652, on a proposé de diminuer les effets nocifs des impuretés contenues dans les bauxites réfractaires à basse teneur en alumine (42 à 70 %) et de faible porosité (porosité inférieure à 20%), en les imprégnant d'une solution contenant au plus dix pour cent (10 %) d'un métal susceptible de former un oxyde réfractaire, tel que du chrome, du fer, du calcium, du molybdène, du zirconium, par exemple sous vide, puis, après séchage à 110°C, en chauffant le matériau imprégné au moins à 1450°C. Les oxydes formés réagissent alors avec les impuretés pour augmenter la réfractarité du matériau de base et diminuer la mouillabilité externe par le verre ou les laitiers.

L'invention pallie ces inconvénients. Elle vise un procédé pour préparer un matériau réfractaire poreux isolant et rigide non mouillé, ni pénétré, ni corrodé par l'acier liquide, facile à mettre en oeuvre, et adapté en particulier à une utilisation dans les différents procédés de coulée continue ou sous pression du métal ferreux fondu, notamment en permettant de maîtriser les vitesses de refroidissement du métal.

### Exposé de l'Invention

Ce procédé pour la fabrication d'un matériau réfractaire isolant rigide susceptible de travailler au contact d'un métal ferreux fondu dans lequel
. tout d'abord, on imprègne un matériau céramique réfractaire de base, avec une solution d'un sel de zirconium ;
. puis, on sèche ce matériau céramique ainsi imprégné ;
. et enfin, on pyrolyse ce matériau séché,
se caractérise :
- en ce que le matériau céramique de base, est un matériau fortement poreux présentant une porosité comprise entre 85 et 95 % ;
- et en ce que on pyrolyse à une température comprise entre 800 et 900°C pendant deux à six heures, de sorte que les parois des pores du matériau céramique de base soient recouvertes d'une fine couche protectrice de zircone.

En d'autres termes, l'invention consiste à immerger un matériau céramique réfractaire fortement poreux dans une solution de sels de zirconium, puis, après séchage, à pyrolyser cette solution, de manière à transformer ce sel de zirconium en oxyde de zirconium, et ainsi à former une fine couche d'oxyde qui recouvre les parois des pores (ou des fibres) du matériau céramique de base, qui reste néanmoins fortement poreux, rigide et réfractaire.

On ne pouvait pas penser que le dépôt d'une fine couche de zircone par la pyrolyse d'un sel de zirconium sur les parois des pores d'un matériau céramique évite la mouillabilité de ce matériau par l'acier fondu, alors que jusqu'alors, ce matériau était facilement mouillé par l'acier fondu. En d'autres termes, cette sélection permet de résoudre avec efficacité un problème qui se posait depuis longtemps.

Selon une première caractéristique fondamentale de l'invention, le matériau céramique de base doit présenter une porosité comprise entre 85 et 95 %. Cette porosité est de préférence voisine de 90 %.

Dans l'état antérieur de la technique, seuls des matériaux réfractaires denses étaient utilisés, matériaux qui ne présentent pas le caractère isolant recherché, car leur porosité est inférieure à 15 %. Ce matériau céramique de base doit en outre présenter une réfractarité suffisante pour supporter la température du métal ferreux fondu, notamment de l'acier. En pratique, on fait appel à des céramiques de structure fibreuse ou à des mousses céramiques à cellules au moins partiellement ouvertes.

On a observé que si la porosité du matériau céramique de base est inférieure à 85 %, le caractère isolant du produit final est trop fortement abaissé pour l'utilisation envisagée, et de plus l'usinabilité décroit rapidement. De même, si la porosité initiale excède 95 %, la teneur mécanique du matériau devient trop faible pour contenir la pression du métal fondu, l'usinage devient lui aussi difficile par manque de rigidité, et enfin le caractère isolant décroit de nouveau rapidement en dessous d'un seuil de densité optimum.

Avantageusement, en pratique :
- le sel de zirconium soluble est un sel organique tel que notamment d'acétate, voire de formiate, de propionate ou un nitrate ; il importe que le sel utilisé soit facilement soluble dans l'eau, notamment à température ambiante, pour bien pénétrer au coeur même du matériau poreux et ainsi en remplir tous les pores ; il importe que l'oxyde de zirconium formé soit le seul résidu solide de la pyrolyse pour conserver au maximum la réfractarité du produit de base.
- la concentration de la solution aqueuse d'imprégnation d'acétate de zirconium, est comprise entre 5 et 23 % en poids de zircone (ZrO₂), et de préférence entre 15 et 20 %, pour obtenir une fine couche continue de zircone tapissant les parois des pores ; si la concentration est inférieure à 5 %, on n'obtient aucun résultat significatif ; si cette concentration est inférieure à 15 %, la fine couche de zircone ne sera pas toujours continue, ce qui altèrera ultérieurement la non-mouillabilité par le métal ferreux fondu ; si cette concentration excède 23 %, la solution d'imprégnation non seulement n'est pas commercialement disponible, mais serait trop visqueuse pour facilement pénétrer et imprégner les pores ; on a observé que l'on obtient de bons résultats avec une concentration comprise entre 18 et 20 % en poids d'acétate de zirconium ;
- l'imprégnation s'effectue par simple trempage ou immersion plein bain à température ambiante ; du fait de la forte porosité du matériau de base, il n'est pas utile, comme dans l'état de la technique antérieur, de faire pénétrer la solution par aspiration ou par action du vide ;
- le séchage s'effectue à l'étuve pendant plusieurs heures à 110-130°C et ce, en fonction du volume de la pièce à sécher ;
- la solution d'imprégnation peut contenir des ajouts connus, afin d'éviter ou de minimiser la migration de la zircone en surface pendant la phase de séchage ;
- la solution peut aussi contenir sans dommage jusqu'à 2 % d'impuretés telles que de l'oxyde d'Hafnium ou autres métaux normalement associés au Zirconium dans la nature, ou utilisés pour stabiliser sa structure ;
- la pyrolyse est effectuée entre 800°C et 900° C, pendant deux à six heures, notamment quatre heures, en présence d'air pour faciliter la formation de l'oxyde de zirconium ; il est totalement inutile de chauffer à des températures aussi élevées que 1450°C, comme dans l'état de la technique rappelé dans le préambule, puisque l'on ne cherche pas à combiner chimiquement les impuretés, mais simplement à former une très fine couche homogène et protectrice (de l'ordre du nanomètre) de zircone sur les parois des pores du matériau céramique de base.

On a observé que si la pyrolyse est conduite à une température inférieure à 800°C, celle-ci est incomplète et il reste dans les pores une proportion plus ou moins grande de carbone. De même, si la température excède 900°C, la zircone naissante a tendance à se combiner au support plutôt que de cristalliser en une couche mince et continue de zircone pure.

Le produit réfractaire fini obtenu est fortement poreux (porosité de 80 % et plus), et donc fortement isolant. Malgré cette forte porosité, ce matériau reste parfaitement rigide. Comme il présente une bonne tenue mécanique, il est donc facile à usiner. Selon une caractéristique originale, les parois de ses pores ou des fibres constituant ce matériau céramique, sont recouvertes d'une fine couche régulière et homogène d'oxyde de zirconium d'épaisseur de l'ordre du nanomètre. De manière inattendue, malgré la forte proportion de pores, donc d'ouvertures, l'acier fondu ne pénètre pas le matériau et ne le traverse pas, alors que l'on sait que l'acier fondu mouille et pénètre facilement les matériaux céramiques poreux. De la sorte, ce matériau peut être utilisé pour la coulée continue ou la coulée sous pression des matériaux ferreux, de l'acier notamment.

On pense que la fine couche de zircone formée sur les parois des pores ou sur les fibres, crée des forces de tensions superficielles qui repoussent l'acier fondu et l'empêchent ainsi de pénétrer la porosité.

Par rapport à l'état de la technique connu et rappelé dans le préambule, l'invention se différencie :
. d'une part, par le choix de conditions opératoires précises, à savoir matériau réfractaire céramique de base fortement poreux, choix d'un sel organique et soluble de zirconium exclusivement et pyrolyse à des températures comprises entre 800 et 900°C ;
. d'autre part, par les résultats obtenus, à savoir forte porosité, donc caractère isolant ; rigidité donc usinabilité, et enfin non mouillabilité par les métaux ferreux fondus, notamment l'acier.

La manière dont l'invention peut être réalisée et les avantages qui en découlent ressortiront mieux des exemples de réalisation qui suivent.

### Exemple 1 :

On utilise comme matériau céramique réfractaire poreux de base une plaque commercialisée par la Demanderesse sous la marque déposée "PROCELIT 160", ayant des dimensions de 650 x 320 x 30 mm, résistant à 1600°C. Cette plaque en matériau céramique réfractaire poreux présente une composition ayant 85 % d'alumine et 15 % de silice, et une densité voisine de 0,3 (soit une porosité de 92 %).

A température ambiante, on immerge cette plaque pendant dix minutes environ (jusqu'à disparition des dernières bulles) dans une solution aqueuse contenant 20 % en poids d'acétate de zirconium. La plaque poreuse absorbe environ 2,5 fois son poids sec de solution.

Pour éliminer entièrement l'eau, on sèche ensuite à l'étuve ventilée à 130°C pendant vingt-quatre heures.

On pyrolyse ensuite au four électrique à 800°C pendant quatre heures. Pendant cette pyrolyse, l'acétate de zirconium est transformée en oxyde de zirconium, et simultanément de l'eau et du gaz carbonique résiduels sont éliminés dans l'atmosphère.

On obtient une plaque ayant les mêmes dimensions que la plaque de départ, constituée par un matériau céramique composite à haute porosité (porosité de 80 %), dont les parois des pores sont recouvertes d'une fine couche de zircone (épaisseur de l'ordre du nanomètre, notamment comprise entre 0,2 et 0,4 nanomètre), ce qui en outre augmente favorablement la rigidité du matériau.

Cette plaque, pour une densité voisine de 0,45 (contre 0,3), et une résistance à la compression de 1,5N/mm², présente une composition moyenne en poids, de :
- 65 % d'alumine (contre 85 %) ;
- 10 % de silice (contre 15 %) ;
- 25 % de zircone.

Malgrè sa très forte porosité, cette plaque à laquelle n'adhère pas l'acier fondu, présente aucune infiltration lorsqu'on la soumet à une pression résultant d'une couche de 300 mm de hauteur d'acier fondu pendant quinze minutes et plus.

Ces plaques rigides sont faciles à usiner et conviennent parfaitement pour la fabrication de masselottes et de busettes pour la coulée continue d'acier et/ou la coulée sous pression.

La zircone déposée sur la paroi des pores affecte légèrement la réfractarité de la plaque, mais surtout empêche l'acier liquide fondu de pénétrer dans les pores du matériau et/ou de la corroder, malgré la forte porosité de la plaque finie.

Comme le traitement d'immersion est effectué à partir d'une solution, on obtient une bonne pénétration à coeur. De la sorte, ce traitement peut être effectué sur des ébauches, ce qui limite les pertes de zircone lors des usinages ultérieurs en finition quand des cotes très précises doivent être obtenues.

### Exemple 2 :

La même plaque de PROCELIT 160 utilisée telle quelle en contact de l'acier fondu, voit sa porosité pénétrée par l'acier sur plus de quinze millimètres de profondeur après trois minutes de contact avec le métal fondu. Cette infiltration altère complètement le caractère isolant du matériau et le rend impropre pour cette application.

### Exemple 3 :

La même plaque de PROCELIT 160 imprégnée cette fois ci par un sel d'un autre métal, tel que le chrome, le magnésium et/ou tout autre métal dont les oxydes réfractaires sont couramment utilisés en sidérurgie, est également pénétrée par l'acier fondu et mise rapidement hors d'usage. Sauf l'aluminium dont l'oxyde est sans effet sur la réfractarité et la mouillabilité, tous se sont révélés nuisibles.

### Exemple 4 :

La même plaque préparée selon le procédé de l'exemple 1, mais pyrolisée à 1450°C, présente une mouillabilité par l'acier fondu légèrement réduite par rapport à l'exemple 2. La couche de zircone naissante a réagi avec la silice et l'alumine du substrat pour former des combinaisons chimiques nouvelles et les forces de tension superficielles qui empêchaient la pénétration du métal dans les pores sont perdues.

Le procédé selon l'invention présente de nombreux avantages, notamment par rapport aux solutions connues à ce Jour. On peut citer :
- la simplicité de fabrication ;
- la facilité de finition des pièces en usinage, même avec des outils habituels en acier ou en carbure ;
- la non mouillabilité du matériau par l'acier fondu, malgré la forte porosité, alors que l'on savait que l'acier fondu mouillait facilement les céramiques poreuses ;
- la possibilité de maîtriser la température de coulée du métal ferreux fondu en réduisant considérablement les pertes thermiques au travers des réfractaires.

De la sorte, ces matériaux réfractaires conviennent parfaitement pour la coulée continue ou sous pression de l'acier.

## Revendications

1. Procédé pour la fabrication d'un matériau réfractaire isolant rigide, susceptible de travailler au contact d'un métal ferreux fondu, dans lequel :
. tout d'abord, on imprègne un matériau céramique réfractaire de base, avec une solution d'un sel de zirconium ;
. puis, on sèche le matériau céramique imprégné ;
. et enfin, on pyrolyse ce matériau séché,
caractérisé :
- en ce que le matériau céramique réfractaire de base est un matériau fortement poreux présentant une porosité comprise entre 85 et 95 % ;
- et en ce que on pyrolyse à une température comprise entre 800 et 900°C pendant deux à six heures, de sorte que les parois des pores du matériau céramique de base soient recouvertes d'une fine couche protectrice de zircone.

2. Procédé selon la revendication 1, caractérisé en ce que la solution d'imprégnation est une solution d'acétate de zirconium à une concentration comprise entre 15 et 23 % en poids d'acétate de zirconium.

3. Procédé selon la revendication 2, caractérisé en ce que la concentration est comprise entre 18 et 20 % en poids d'acétate de zircone.

4. Procédé selon la revendication 1, caractérisé en ce que l'imprégnation s'effectue par simple immersion plein bain à température ambiante, puis en ce que le séchage s'effectue à l'étuve à 110-130°C.

5. Matériau céramique réfractaire poreux, à haute porosité, obtenu par la mise en oeuvre du procédé selon la revendication 1, caractérisé :
- en ce que le matériau est rigide et présente une porosité d'au moins quatre-vingt pour cent (80 %), et ;
- en ce que la paroi des pores est recouverte d'une fine couche d'oxyde de zirconium d'épaisseur de l'ordre du nanomètre.

## Claims

1. Process for the manufacture of a rigid insulating refractory material capable of working in contact with a molten ferrous metal, in which:
- first of all, a base refractory ceramic material is impregnated with a solution of a zirconium salt;
- the ceramic material thus impregnated is then dried;
- and finally this dried material is pyrolyzed,
characterized :
- in that the base refractory ceramic material is a highly porous material exhibiting a porosity of between 85 and 95%;
- and in that the pyrolysis is carried out at a temperature of between 800 and 900°C for two to six hours, so that the walls of the pores of the base ceramic material are covered with a fine protective layer of zirconia.

2. Process according to claim 1, characterized in that the impregnating solution is a solution of zirconium acetate at a concentration of between 15 and 23% by weight of zirconium acetate.

3. Process according to claim 2, characterized in that the concentration is between 18 and 20% by weight of zirconia acetate.

4. Process according to claim 1, characterized in that the impregnation is performed merely by full-bath immersion at room temperature and in that the drying is performed in the oven at 110-130°C.

5. Porous refractory ceramic material, of high porosity, obtained by implementing the process according to claim 1, characterized:
- in that the material is rigid and exhibits a porosity of at least eighty percent (80%), and;
- in that the wall of the pores is covered with a fine layer of zirconium oxide of the order of a nanometer in thickness.

## Patentansprüche

1. Verfahren zum Herstellen eines steifen isolierenden feuerfesten Materials, das mit einem geschmolzenen Eisenmetall in Kontakt stehend einsetzbar ist, bei dem
· zunächst ein feuerfestes keramisches Basismaterial mit einer Lösung eines Zirkoniumsalzes imprägniert wird;
· anschließend das imprägnierte keramische Material getrocknet wird; und
· schließlich das getrocknete Material pyrolisiert wird,
dadurch gekennzeichnet,
- daß das feuerfeste keramische Basismaterial ein stark poröses Material ist, das eine Porosität zwischen 85 und 95 % aufweist; und
- daß während zwei bis sechs Stunden bei einer Temperatur zwischen 800 und 900°C pyrolisiert wird, so daß die Wände der Poren des keramischen Basismaterials mit einer dünnen Schutzschicht an Zirkoniumoxid bedeckt werden.

2. Verfahren nach Anspruch 1, dadurch gekennzeichnet, daß die Imprägnierlösung eine Zirkoniumacetatlösung mit einer Konzentration zwischen 15 und 23 Gew.-% an Zirkoniumacetat ist.

3. Verfahren nach Anspruch 2, dadurch gekennzeichnet, daß die Konzentration zwischen 18 und 20 Gew.-% an Zirkoniumacetat liegt.

4. Verfahren nach Anspruch 1, dadurch gekennzeichnet, daß das Imprägnieren durch ein einfaches Eintauchen in ein Vollbad bei Umgebungstemperatur durchgeführt wird, und daß anschließend das Trocknen in einem Trockenofen bei 110-130° C durchgeführt wird.

5. Poröses feuerfestes keramisches Material mit hoher Porosität, erhalten durch Ausführen des Verfahrens nach Anspruch 1, dadurch gekennzeichnet,
- daß das Material steif ist und eine Porosität von zumindest achtzig Prozent (80 %) aufweist, und
- daß die Wand der Poren mit einer dünnen Schicht an Zirkoniumoxid mit einer Dicke im Nanometerbereich bedeckt ist.
